# EUROPEAN PATENT SPECIFICATION

(11) **EP 3 537 846 B1**
(45) Date of publication and mention of the grant of the patent: **24.05.2023**
(21) Application number: 17868344.7
(22) Date of filing: 27.10.2017
(51) Int. Cl.: H04W 76/12, H04W 92/02

(54) **BASE STATION, GATEWAY, APPARATUS, METHOD, PROGRAM, AND RECORDING MEDIUM**
BASISSTATION, GATEWAY, VORRICHTUNG, VERFAHREN, PROGRAMM UND AUFZEICHNUNGSMEDIUM
STATION DE BASE, PASSERELLE, DISPOSITIF, PROCÉDÉ, PROGRAMME, ET SUPPORT D'ENREGISTREMENT

(30) Priority: 02.11.2016 JP 2016215218
(43) Date of publication of application: 11.09.2019
(73) Proprietor: NEC Corporation, Tokyo 108-8001 (JP)
(72) Inventor: OGURA, Daisuke, Tokyo 108-8001 (JP)
(74) Representative: MacDougall, Alan John Shaw
(86) International application number: PCT/JP2017/038901
(87) International publication number: WO 2018/084080

(56) References cited:
- WO-A1-2006/038268
- WO-A1-2015/141849
- WO-A1-2017/061948
- JP-A- 2010 081 541
- US-A1- 2014 079 049
- "3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 14)", 3GPP STANDARD; 3GPP TS 36.300, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V14.0.0, 29 September 2016 (2016-09-29), pages 1-314, XP051172664, [retrieved on 2016-09-29]
- Anonymous: "3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 14", TS 36.300 V14.0.0, 29 September 2016 (2016-09-29), pages 1-314, XP051172664, Retrieved from the Internet: URL:http://www.3gpp.org/DynaReport/36300.h tm
- "LTE; EVOLVED UNIVERSAL TERRESTRIAL RADOI ACCESS NETWORK (E-UTRAN) AND WIRELESS LAN (WLAN); XW APPLICATION PROTOCOL (XWAP) RELEASES 13", TS 36.463 V13.1.0, 1 July 2016 (2016-07-01), pages 10-49, XP055482520, Retrieved from the Internet: URL:http://www.3gpp.org/DynaReport/36463.h tm
- Anonymous: "3rd Generation Partnership Project; Technical Specification Group Services and System Aspects; 3GPP System Architecture Evolution (SAE); Security architecture (Release 14)", TS 33.401 V14.0.0, 30 September 2016 (2016-09-30), pages 1-152, XP051172838, Retrieved from the Internet: URL:http://www.3gpp.org/DynaReport/33401.h tm
- BROADCOM: "Analysis On the Use of Xw Interface(s) for eLWIP", 3GPP TSG-RAN WG3 Meeting #93-bis R3-162480, 1 October 2016 (2016-10-01), XP051152125, Retrieved from the Internet: URL:http://www.3gpp.org/ftp/tsg ran/WG3 Iu/ TSGR3_93bis/Docs/R3-162480.zip
- ERICSSON: "LWIP Addition and Modification", 3GPP TSG-RAN WG3 Meeting #94 R3-162972, 4 November 2016 (2016-11-04), XP051193882, Retrieved from the Internet: URL:http://www.3gpp.org/ftp/tsg_ran/WG3- Iu/TSGR3_94/Docs/R3-162972.zip

## Description

### BACKGROUND

### Technical Field

The present disclosure relates to a base station, a gateway, an apparatus, a method, a program and a recording medium.

### Background Art

Currently, in Third Generation Partnership Project (3GPP), development of LTE/WLAN Radio Level Integration with IPsec Tunnel (LWIP) as a data transmission scheme with the use of both of an evolved Node B (eNB) and a wireless local area network access point (WLAN-AP) is ongoing.

In 3GPP Release-13 and Release-14, S1-U which is an interface of U-plane between an Evolved Universal Terrestrial Radio Access Network (E-UTRAN) and an Evolved Packet Core (EPC) terminates at an eNB, and an eNB transmits/receives data to/from an LWIP Security Gateway (LWIP-SeGW). GPRS Tunneling Protocol for User Plane (GTP-U) is used for S1-U. In addition, a frame protocol such as Generic Routing Encapsulation (GRE), GPRS Tunneling Protocol for User Plane (GTP-U) or the like is used for transmission and reception of data between an eNB and an LWIP-SeGW.

For example, technologies related to LWIP are disclosed in NPL 1 and NPL 2. Specifically, a protocol stack for LWIP is disclosed in NPL 1 and NPL 2.

For example, PTL1 and PTL2 disclose that a gateway connected to a WLAN-AP or a WLAN-AP itself communicates with a core network node using a GTP-U protocol.

### Citation List

### Patent Literature

[PTL 1] US 2014/213219 A1
[PTL 2] US 2006/050667 A1
[PTL 3] US 2014/079049 A1 discloses a method and apparatus for sending user plane traffic via a node located between a base station and a Serving Gateway in a mobile telecommunications network. The base station receives a message containing tunneling protocol information identifying the Serving Gateway. It sends a second message towards the node, the second message including tunneling protocol information identifying the base station and the Serving Gateway. The base station receives a third message from the node, the third message including tunneling protocol information for the base station to use towards the node, and tunneling protocol information for the Serving Gateway to use towards the node. A fourth message is sent, which includes tunneling protocol information for the Serving Gate way to use towards the node. User plane traffic can then be sent between the base station and the Serving Gateway via the node.

### Non Patent Literature

[NPL 1] 3GPP TS 36.300 V14.0.0 (2016-09) "3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 13)"
[NPL 2] 3GPP TS 33.401 V14.0.0 (2016-09) "3rd Generation Partnership Project; Technical Specification Group Services and System Aspects; 3GPP System Architecture Evolution (SAE); Security architecture (Release 13)"

### SUMMARY

### Technical Problem

For example, when a termination point of S1-U is an eNB and GRE or GTP-U is used for transmission and reception of data between an eNB and LWIP-SeGW as disclosed in NPL 2, the eNB replaces the header for each data forwarding. Specifically, for example in downlink, the eNB replaces the header (a header of GTP-U) of a packet received from a core network with another header (a header of GRE or GTP-U). In addition, for example in uplink, the eNB replaces the header (a header of GRE or GTP-U) of a packet received from a LWIP-GW with another header (a header of GTP-U). Therefore, a processing load of the eNB for data forwarding may be increased. Furthermore, since an eNB and a LWIP-SeGW exchange tunnel endpoint identifiers (TEIDs) of GTP-U or keys of GRE, a processing load of the eNB for such an exchange may be increased. In this way, there is concern that a processing load of the eNB is increased.

In addition, for example, when a gateway connected to a WLAN-AP or a WLAN-AP itself communicates with a core network node using a GTP-U protocol as disclosed in PTL 1 and PTL 2, the core network node exchanges TEIDs with the gateway or the WLAN-AP. Therefore, a load of the core network node may be increased. In particular, when a user equipment (UE) communicates with both of a base station (an eNB or a NB) and a WLAN-AP, TEIDs for both of the base station and the WLAN-AP are exchanged, and the load of the core network may be increased. In this way, the core network may be greatly affected.

### Summary of Invention

The present invention provides a base station and corresponding method as set out in the independent claims appended hereto, and preferred embodiments are indicated in the dependent claims that follow.

### Advantageous Effects of Disclosure

According to an example aspect of the present disclosure, it is possible to reduce effects on a core network and reduce a processing load of a base station in case of transmission and reception of data via a WLAN. Note that the present disclosure may exert other advantageous effects instead of the above advantageous effects or together with the above advantageous effects.

### BRIEF DESCRIPTION OF THE DRAWINGS

Figure 1 is an explanatory diagram for describing an example of a network configuration of LWIP assumed in 3GPP.
Figure 2 is an explanatory diagram for describing an example of a protocol stack of LWIP assumed in 3GPP Release-13.
Figure 3 is an explanatory diagram for describing an example of a protocol stack of LWIP assumed in 3GPP Release-14.
Figure 4 is an explanatory diagram illustrating an example of a schematic configuration of a system according to example embodiments of the present disclosure.
Figure 5 is a block diagram illustrating an example of a schematic configuration of a base station according to a first example embodiment.
Figure 6 is a block diagram illustrating an example of a schematic configuration of a gateway according to a first example embodiment.
Figure 7 is an explanatory diagram for describing an example of a protocol stack according to a first example embodiment.
Figure 8 is a sequence diagram for describing an example of a schematic flow of processing according to a first example embodiment.
Figure 9 is an explanatory diagram for describing a first example of a protocol stack according to a modified example of a first example embodiment.
Figure 10 is an explanatory diagram for describing a second example of a protocol stack according to a modified example of a first example embodiment.
Figure 11 is a block diagram illustrating an example of a schematic configuration of a base station according to a second example embodiment.
Figure 12 is a block diagram illustrating an example of a schematic configuration of a gateway according to a second example embodiment.

### DESCRIPTION OF THE EXAMPLE EMBODIMENTS

Example embodiments of the present disclosure will be described below in detail with reference to the accompanying drawings. Note that, in the present description and drawings, elements to which the same or similar descriptions are applicable are denoted by the same reference signs, whereby overlapping descriptions may be omitted.

Description will be given in the following order.
1. Related Art
2. Overview of Example Embodiments of the Present disclosure
3. Configuration of System according to Example Embodiments of the Present disclosure
4. First Example Embodiment
   4.1. Configuration of Base Station
   4.2. Configuration of Gateway
   4.3. Technical Features
   4.4. Modified Example
5. Second Example Embodiment
   5.1. Configuration of Base Station
   5.2. Configuration of Gateway
   5.3. Technical Features

### <<1. Related Art>>

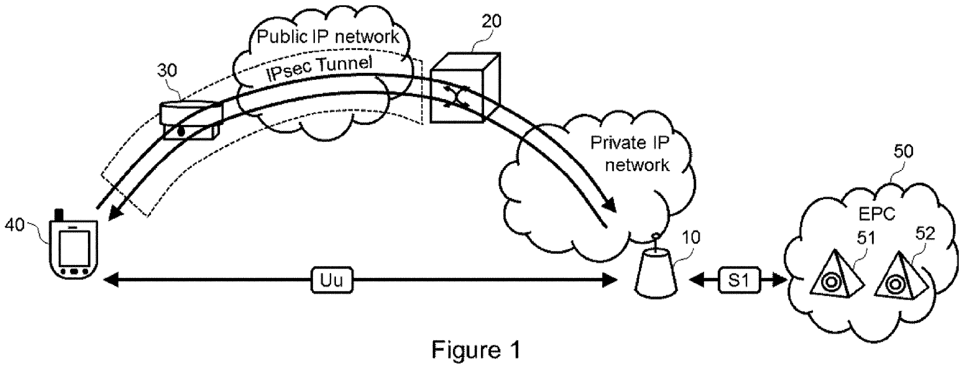

LWIP is described as a related art related to the present example embodiments with reference to Figure 1 to Figure3.

In the present day, in 3GPP, development of LWIP as a data transmission scheme with the use of both of an eNB and a WLAN-AP is ongoing.

Figure 1 is an explanatory diagram for describing an example of a network configuration of LWIP assumed in 3GPP. Referring to Figure 1, an eNB 10, a LWIP-SeGW 20, a WLAN-AP 30, a UE 40, a mobility management entity (MME) 51 and a serving gateway (S-GW) 52 are illustrated. In LWIP, the eNB 10 and the UE 40 can transmit and receive data over a Uu interface, and can transmit and receive data via the LWIP-SeGW 20 and the WLAN-AP 30. The LWIP-SeGW 20 provides a Security Architecture for Internet Protocol (IPsec) tunnel for transmission and reception of data via a WLAN. In addition, S1 (S1-U for U-plane and S1-C for C-plane) which is an interface between an E-UTRAN and an EPC 50 terminates at the eNB.

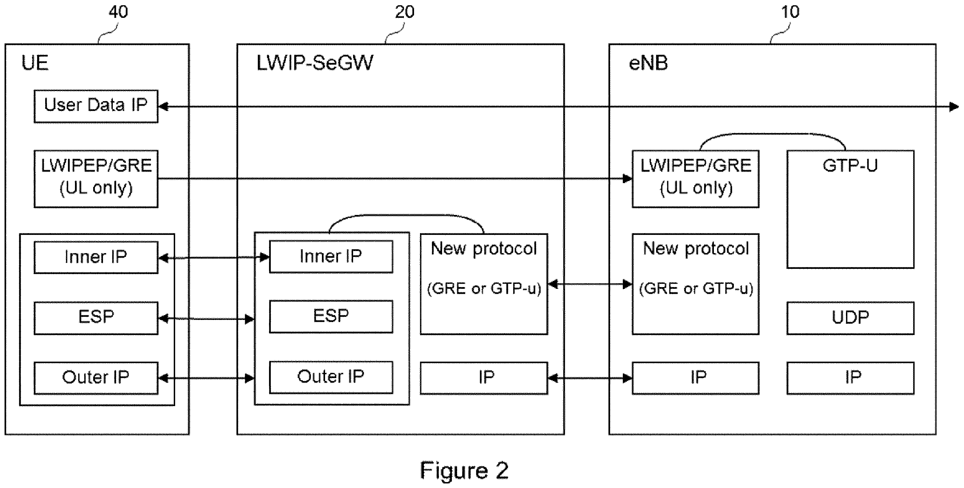

Figure 2 is an explanatory diagram for describing an example of a protocol stack of LWIP assumed in 3GPP Release-13. Data is transmitted and received between the LWIP-SeGW 20 and UE 40 using an encapsulation security payload (ESP). In addition, data is transmitted and received between the eNB 10 and the LWIP-SeGW 20 using a new protocol. For example, the new protocol is GRE or GTP-U, and User Datagram Protocol (UDP). Furthermore, for uplink, uplink data is transmitted and received between the eNB 10 and the UE 40 using LWIPEP. That is, the UE 40 adds a LWIPEP header to uplink data transmitted via a WLAN. The eNB 10, which receives the uplink data, identifies a bearer corresponding to the uplink data from the LWIPEP header. Note that, for example, LWIPEP may be implemented with GRE or GTP-U.

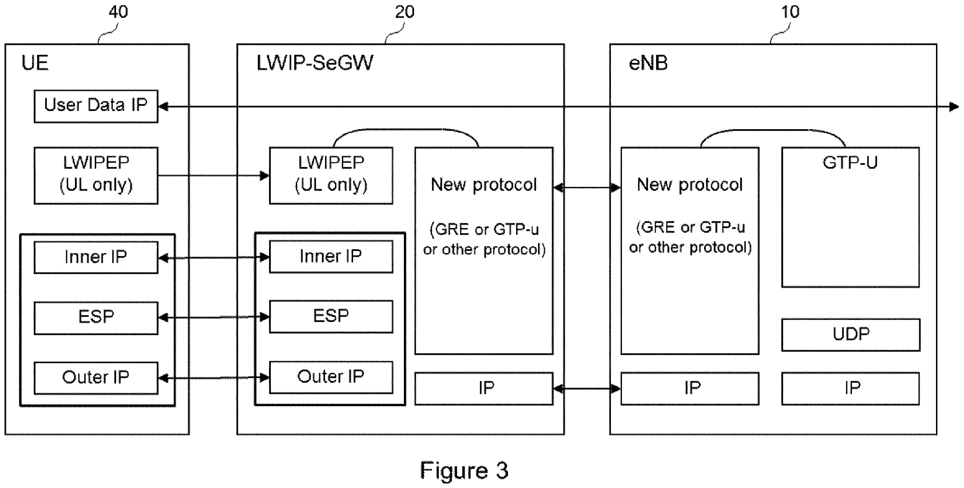

Figure 3 is an explanatory diagram for describing an example of a protocol stack of LWIP assumed in 3GPP Release-14. Particularly in Release-14, uplink data is transmitted and received between the LWIP-SeGW 20 and UE 40 using LWIPEP. In addition, data is transmitted and received between the eNB 10 and the LWIP-SeGW 20 using a new protocol (for example, GRE or GTP-U, and UDP).

### «2. Overview of Example Embodiments of the Present disclosure»

### (1) Technical Problem

For example, when a termination point of S1-U is an eNB and GRE or GTP-U is used for transmission and reception of data between an eNB and LWIP-SeGW as disclosed in 3GPP TS 33.401 V13.3.0, the eNB replaces the header for each data forwarding. Specifically, for example in downlink, the eNB replaces the header (a header of GTP-U) of a packet received from a core network with another header (a header of GRE or GTP-U). In addition, for example in uplink, an eNB replaces the header (a header of GRE or GTP-U) of a packet received from a LWIP-GW with another header (a header of GTP-U). Therefore, a processing load of the eNB for data forwarding may be increased. Furthermore, since an eNB and a LWIP-SeGW exchange TEIDs of GTP-U or keys of GRE, a processing load of the eNB for such an exchange may be increased. In this way, there is concern that a processing load of the eNB is increased.

In addition, for example, when a gateway connected to a WLAN-AP or a WLAN-AP itself communicates with a core network node using a GTP-U protocol as disclosed in JP 2016-507993 T, JP 2005-529560 T and the like, the core network node exchanges TEIDs with a gateway or a WLAN-AP. Therefore, the load of the core network node may be increased. In particular, when a UE communicates with both of a base station (an eNB or a NB) and a WLAN-AP, TEIDs for both of the base station and the WLAN-AP are exchanged, and the load of the core network may be increased. In this way, the core network may be greatly affected.

An example object of example embodiments of the present disclosure is to make it possible to reduce effects on a core network and reduce a processing load of a base station in case of transmission and reception of data via a WLAN.

### (2) Technical Feature

According to the example embodiments of the present disclosure, for example, a base station (eNB) notifies a gateway (LWIP-SeGW) used for communication via a WLAN of a TEID of which one of the base station and a core network node (MME) notifies the other of the base station and the core network node.

On the other hand, the gateway (LWIP-SeGW) transmits or receives a packet including a header containing the TEID based on the TEID.

This makes it possible, for example, to reduce effects on a core network (EPC) and reduce a processing load of a base station (eNB) in case of transmission and reception of data via a WLAN.

Note that, the above described technical feature is one specific example of the example embodiments of the present disclosure, and of course the example embodiments are not limited to the above described technical feature.

### <<3. Configuration of System according to Example Embodiments of the Present disclosure>>

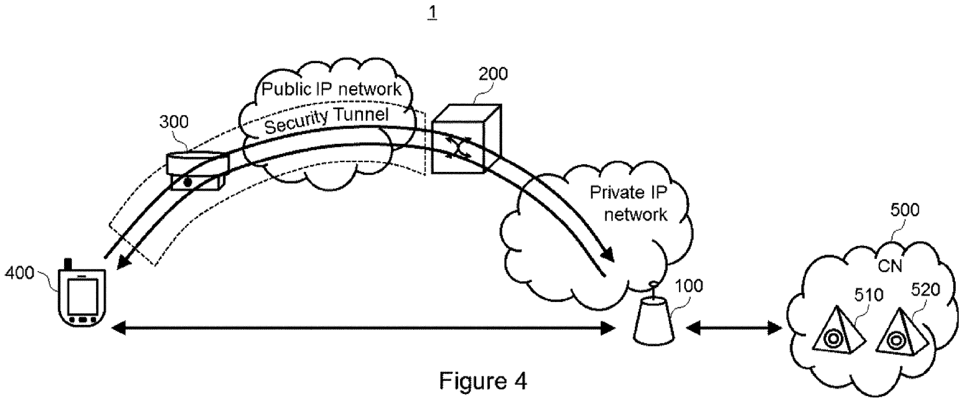

An example of a configuration of a system 1 according to the example embodiments is described with reference to Figure 4. Figure 4 is an explanatory diagram illustrating an example of a schematic configuration of the system 1 according to the example embodiments of the present disclosure. Referring to Figure 4, the system 1 includes a base station 100, a gateway 200, a WLAN-AP 300, a terminal apparatus 400 and a core network 500.

For example, the system 1 is a system that complies with 3GPP standards. More specifically, the system 1 may be a system that complies with LTE, LTE-Advanced and/or System Architecture Evolution (SAE). Alternatively, the system 1 may be a system that complies with a standard of Fifth Generation (5G). Of course, the system 1 is not limited to these examples.

### (1) Base Station 100

The base station 100 is a node which performs wireless communication with a terminal apparatus. In other word, the base station 100 is a node of a radio access network (RAN). For example, the base station 100 may be an eNB, or may be a generation Node B (gNB) in 5G. The base station 100 may include a plurality of units (or a plurality of nodes). The plurality of units (or plurality of nodes) may include a first unit (or a first node) performing processing of a higher protocol layer, and a second unit (or a second node) performing processing of a lower protocol layer. As an example, the first unit may be referred to as a center/central unit (CU), and the second unit may be referred to as a distributed unit (DU) or an access unit (AU). As another example, the first unit may be referred to as a digital unit (DU), and the second unit may be referred to as a radio unit (RU) or a remote unit (RU). The digital unit (DU) may be a base band unit (BBU), and the RU may be a remote radio head (RRH) or a remote radio unit (RRU). Terms used to refer to the first unit (or first node) and the second unit (or second node) are, of course, not limited to these examples. Alternatively, the base station 100 may be a single unit (or single node). In this case, the base station 100 may be one of the plurality of units (e.g. one of the first unit and the second unit) and may be connected to another one of the plurality of unit (e.g. the other one of the first unit and the second unit).

In particular, according to the example embodiments, the base station 100 can transmit/receive data to/from the terminal apparatus 400 wirelessly (e.g. over a Uu interface), and can transmit/receive data to/from the terminal apparatus 400 via the gateway 200 and the WLAN-AP300. Specifically, for example, the base station 100 can perform operations of LWIP.

### (2) Gateway 200

The gateway 200 is a gateway used for communication via a WLAN and located between the base station 100 and the WLAN-AP300 & the terminal apparatus 400.

For example, the gateway 200 is a security gateway for ensuring security of communication via a WLAN. For example, the gateway 200 provides a security tunnel (e.g. an IPsec tunnel) for communication via a WLAN. More specifically, for example, the gateway 200 is a LWIP-SeGW.

### (3) WLAN-AP 300

The WLAN-AP 300 is an access point of a WLAN and performs wireless communication with a terminal apparatus (e.g. the terminal apparatus 400) in conformity with one or more of IEEE 802.11 series (IEEE 802.11b/11a/11g/11n/11ac etc.).

### (4) Terminal Apparatus 400

The terminal apparatus 400 performs wireless communication with a base station. For example, the terminal apparatus 400 performs wireless communication with the base station 100 when the terminal apparatus 400 is located in a coverage area of the base station 100. For example, the terminal apparatus 400 is a UE.

Particularly, in the present example embodiments, the terminal apparatus 400 can transmit/receive data to/from the base station 100 wirelessly (e.g. over a Uu interface), and can transmit/receive data to/from the base station 100 via the WLAN-AP 300 and the gateway 200. Specifically, for example, the terminal apparatus 400 can perform operations of LWIP.

### (5) Core Network 500

The core network 500 includes a first core network node 510 and a second core network node 520.

The first core network node 510 is a node responsible for processing of C-plane. For example, the first core network node 510 transmits a control message to the base station 100, and receives a control message from the base station 100.

The second core network node 520 is a node responsible for processing of U-plane. For example, the second core network node 520 transmits a data packet (a packet including data) to the base station 100, and receives a data packet from the base station 100.

For example, the core network node 500 is an EPC, the first core network node 510 is an MME, and the second core network node 520 is a S-GW.

### «4. First Example Embodiment»

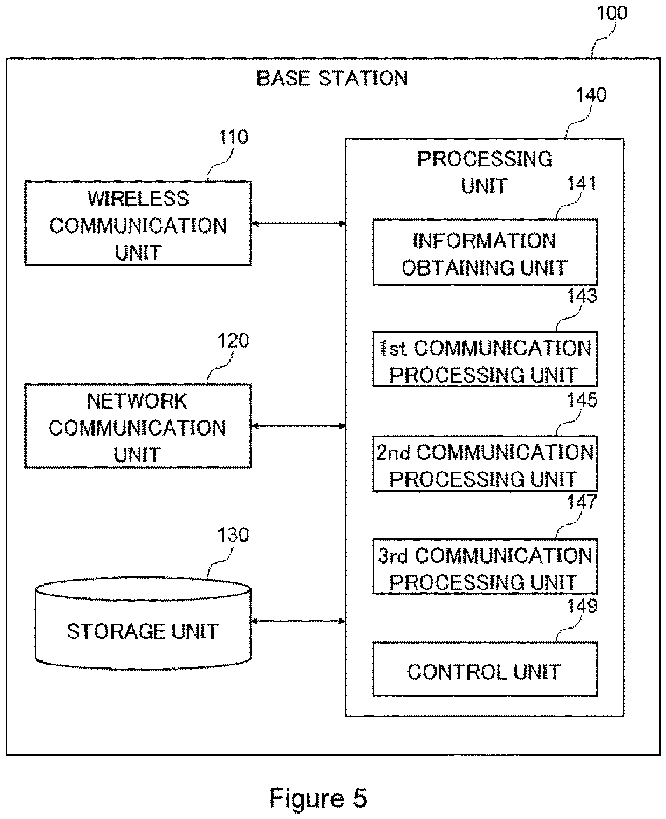

Subsequently, a first example embodiment of the present disclosure will be described with reference to Figure 5 to Figure 10.

### <4.1. Configuration of Base Station>

Firstly, an example of a configuration of the base station 100 according to the first example embodiment is described with reference to Figure 5. Figure 5 is a block diagram illustrating an example of a schematic configuration of the base station 100 according to the first example embodiment. Referring to Figure 5, the base station 100 includes a wireless communication unit 110, a network communication unit 120, a storage unit 130 and a processing unit 140.

### (1) Wireless Communication Unit 110

The wireless communication unit 110 is configured to wirelessly transmit and receive signals. For example, the wireless communication unit 110 is configured to receive signals from a terminal apparatus and transmit signals to a terminal apparatus.

### (2) Network Communication Unit 120

The network communication unit 120 is configured to receive signals from a network and transmit signals to a network.

### (3) Storage Unit 130

The storage unit 130 is configured to store programs and parameters for operation of the base station 100 as well as various data temporarily or permanently.

### (4) Processing Unit 140

The processing unit 140 is configured to provide various functions of the base station 100. The processing unit 140 includes an information obtaining unit 141, a first communication processing unit 143, a second communication processing unit 145, a third communication processing unit 147, and a control unit 149. Note that the processing unit 140 may further include another constituent element than these constituent elements. That is, the processing unit 140 may perform operations other than the operations of these constituent elements. Specific operations of the information obtaining unit 141, the first communication processing unit 143, the second communication processing unit 145, the third communication processing unit 147, and the control unit 149 will be described in detail later.

For example, the processing unit 140 (the first communication processing unit 143) communicates with the gateway 200 through the network communication unit 120. For example, the processing unit 140 (the second communication processing unit 145) communicates with a core network node (e.g. the first core network node 510 or the second core network node 520) through the network communication unit 120. For example, the processing unit 140 (the third communication processing unit 147) communicates with a terminal apparatus (e.g. the terminal apparatus 400) through the wireless communication unit 110.

### (5) Example Implementations

The wireless communication unit 110 may be implemented with an antenna, a radio frequency (RF) circuit and the like. The network communication unit 120 may be implemented with a network adapter, a network interface card or the like. The storage unit 130 may be implemented with a memory (for example, non-volatile memory and/or volatile memory), hard disc and/or the like. The processing unit 140 may be implemented with a base band (BB) processor, another processor and/or the like. The information obtaining unit 141, the first communication processing unit 143, the second communication processing unit 145, the third communication processing unit 147 and the control unit 149 may be implemented with the same processor or with respective different processors. The above memory (storage unit 130) may be included in such a processor (a chip).

The base station 100 may include a memory that stores a program and one or more processors that are capable of executing the program, and the one or more processors may execute the operations of the processing unit 140 (the information obtaining unit 141, the first communication processing unit 143, the second communication processing unit 145, the third communication processing unit 147 and the control unit 149). The program may be a program for causing a processor to execute the operations of the processing unit 140 (the operations of the information obtaining unit 141, the first communication processing unit 143, the second communication processing unit 145, the third communication processing unit 147 and the control unit 149).

### <4.2. Configuration of Gateway>

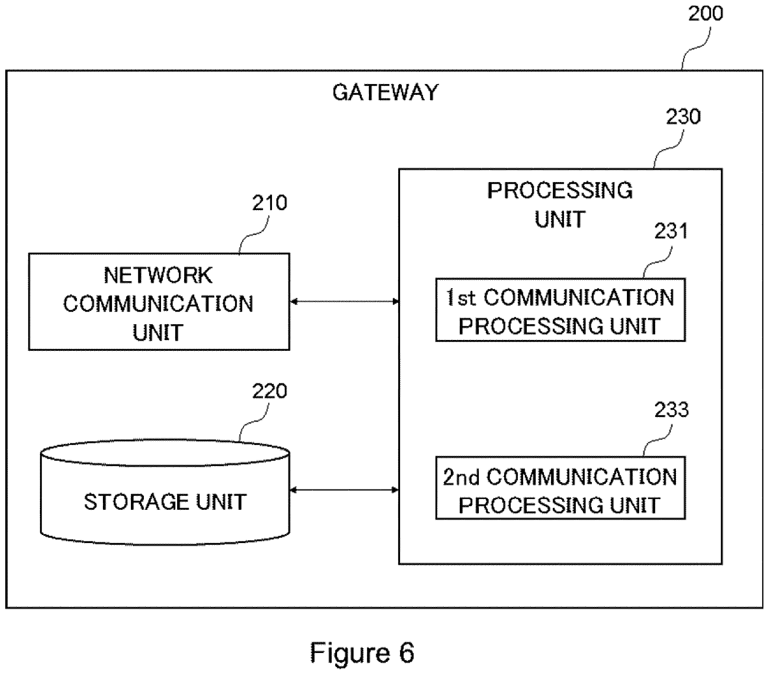

Next, an example of a configuration of the gateway 200 according to the first example embodiment is described with reference to Figure 6. Figure 6 is a block diagram illustrating an example of a schematic configuration of the gateway 200 according to the first example embodiment. Referring to Figure 6, the gateway 200 includes a network communication unit 210, a storage unit 220 and a processing unit 230.

### (1) Network Communication Unit 210

The network communication unit 210 is configured to receive signals from a network and transmit signals to a network.

### (2) Storage Unit 220

The storage unit 220 is configured to store programs and parameters for operation of the gateway 200 as well as various data temporarily or permanently.

### (3) Processing Unit 230

The processing unit 230 is configured to provide various functions of the gateway 200. The processing unit 230 includes a first communication processing unit 231 and a second communication processing unit 233. Note that the processing unit 230 may further include another constituent element than these constituent elements. That is, the processing unit 230 may perform operations other than the operations of these constituent elements. Specific operations of the first communication processing unit 231 and the second communication processing unit 233 will be described in detail later.

For example, the processing unit 230 communicates with another node through the network communication unit 210. Specifically, for example, the processing unit 230 (the first communication processing unit 231) communicates with the terminal apparatus 400 via a WLAN (the WLAN-AP 300) through the network communication unit 210. In addition, for example, the processing unit 230 (the second communication processing unit 233) communicates with the base station 100 (or a core network node) through the network communication unit 210.

### (4) Example Implementations

The network communication unit 210 may be implemented with a network adapter, a network interface card or the like. The storage unit 220 may be implemented with a memory (for example, non-volatile memory and/or volatile memory), hard disc and/or the like. The processing unit 230 may be implemented with a processor and/or the like. The first communication processing unit 231 and the second communication processing unit 233 may be implemented with the same processor or with respective different processors. The above memory (storage unit 220) may be included in such a processor (a chip).

The gateway 200 may include a memory that stores a program and one or more processors that are capable of executing the program, and the one or more processors may execute the operations of the processing unit 230 (the operations of the first communication processing unit 231 and the second communication processing unit 233). The program may be a program for causing a processor to execute the operations of the processing unit 230 (the operations of the first communication processing unit 231 and the second communication processing unit 233).

### <4.3. Technical Features>

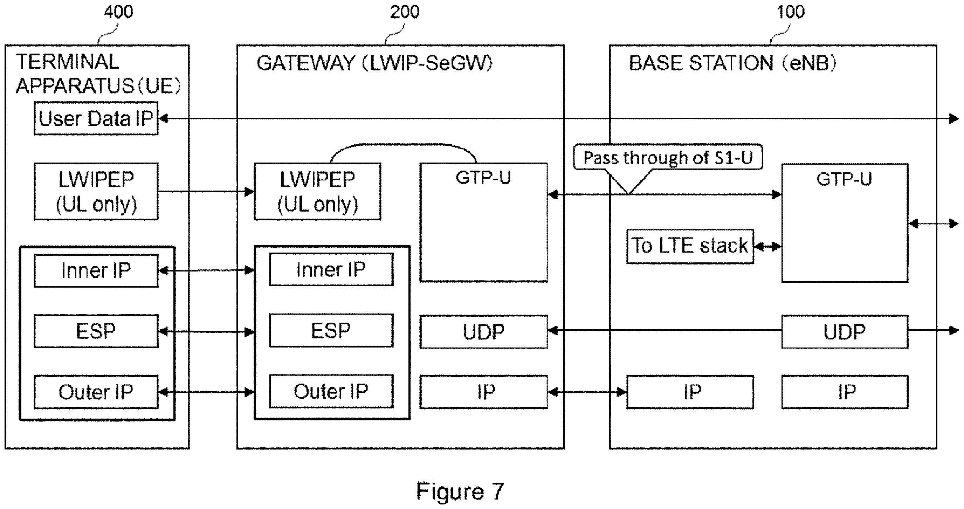

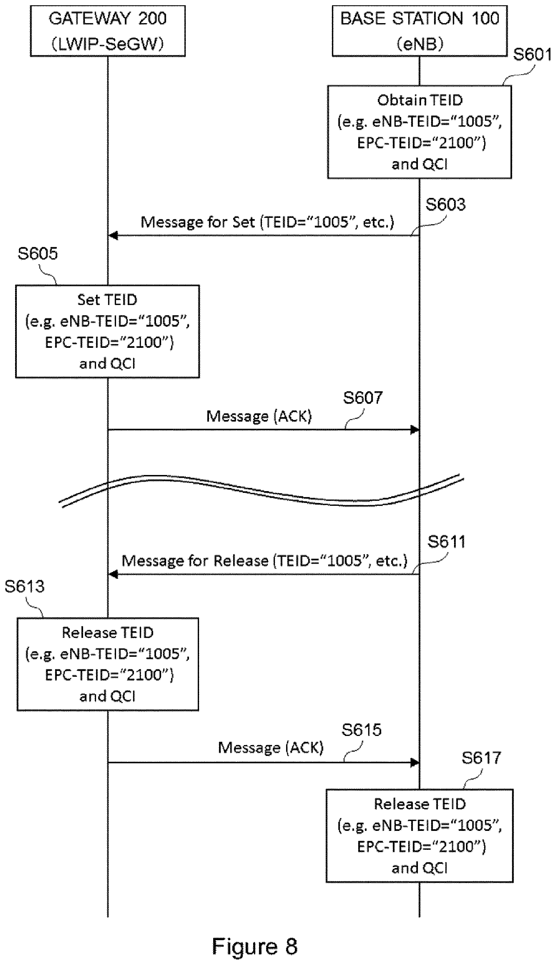

Next, technical features of the first example embodiment are described with reference to Figure 7 and Figure 8.

According to the first example embodiment, the base station 100 (the information obtaining unit 141) obtains a tunnel endpoint identifier (TEID) of which one of the base station 100 and the first core network node 510 notifies the other of the base station 100 and the first core network node 510. Then, the base station 100 (the first communication processing unit 143) notifies the gateway 200 of the TEID.

On the other hand, the gateway 200 (the second communication processing unit 233) transmits or receives a packet including a header containing the TEID based on the TEID.

For example, the TEID is a GTP TEID.

### (1) Downlink

### (1-1) Tunnel Endpoint Identifier (TEID)

As a first example, the TEID (of which the base station 100 notifies the gateway 200) is a TEID of the base station 100 side, of which the base station 100 notifies the first core network node 510. That is, the base station 100 also notifies the gateway 200 of a TEID of the base station 100 side in addition to notifying the first core network 510 (e.g. MME) of the TEID of the base station 100 side.

The TEID of the base station 100 side is assigned by the base station 100, and is included in a packet transmitted from the core network 500 (the second core network node 520) to the base station 100. The TEID of the base station 100 side can be also be referred to as a downlink TEID (e.g. DL GTP TEID). For example, the base station 100 is an eNB, and the TEID of the base station 100 side is an eNB TEID.

This, for example, enables the gateway 200 to receive a packet including the TEID and terminate a tunnel (e.g. a GTP-U tunnel) corresponding to the TEID. Therefore, as described later, replacement of a header by the base station 100 may be omitted, and a processing load of base station 100 may be reduced.

In addition, since the base station 100 performs an assignment of a TEID and an exchange of the TEID with the first core network node 510, the gateway 200 does not have to perform these operations. Therefore, the first core network 510 does not need to perform any new operations. In this way, effects to the core network 500 may be reduced.

### (1-2) Transmission and Reception of Data

The base station 100 (the second communication processing unit 145) receives, from the core network 500 (the second core network node 520), a packet including data addressed to the terminal apparatus 400 and a header containing the TEID of the base station 100 side. For example, the header is a GTP-U header, and the packet is a GTP-U packet (or a UDP packet).

### - Transmission via WLAN

For example, the base station 100 (the first communication processing unit 143) transmits, to the gateway 200, the packet including the header and the data. That is, the base station 100 forwards the packet to the gateway 200 without performing replacement of a header (removal of the header and addition of a new header).

For example, the gateway 200 (the second communication processing unit 233) receives the packet from the base station 100 based on the TEID of the base station 100 side. Then, the gateway 200 (the first communication processing unit 231) transmits the data included in the packet to the terminal apparatus 400 via a WLAN (the WLAN-AP 300).

In this case, a termination point of a tunnel (e.g. a GTP-U tunnel) corresponding to the TEID is gateway 200. That is, the termination point of the tunnel is extended from the base station 100 to the gateway 200.

Thereby, for example, replacement of a header by the base station 100 is omitted and a processing load of the base station 100 is reduced.

### - Direct Transmission

Alternatively, the base station 100 (the third communication processing unit 147) may transmit the data to the terminal apparatus 400.

In this case, the termination point of a tunnel (e.g. a GTP-U tunnel) corresponding to the TEID is the base station 100. That is, the termination point of the tunnel remains the base station 100.

### - Determination by Base Station 100

For example, the base station 100 (the control unit 149) determines whether to transmit the data to the terminal apparatus 400 directly or transmit the data to the terminal apparatus 400 via a WLAN. For example, if it is determined to transmit the data to the terminal apparatus 400 directly, the base station 100 (the third communication processing unit 147) transmits the data to the terminal apparatus 400. On the other hand, for example, if it is determined to transmit the data to the terminal apparatus 400 via a WLAN (the WLAN-AP 300), the base station 100 (the first communication processing unit 143) transmits, to the gateway, the packet including the header and the data.

For example, this makes it possible to perform, using the same TEID, direct transmission from the base station 100 to the terminal apparatus 400 and transmission to the terminal apparatus 400 via a WLAN. Therefore, processing for an assignment and an exchange of a TEID etc. may be reduced.

For example, the base station 100 (the control unit 149) performs the above described determination based on required quality per user or service, a status of utilization of radio resources, a status of a load of the gateway 200 or a WLAN (the WLAN-AP 300) and/or the like. For example, this makes it possible to provide a stable service to a user (the terminal apparatus 400).

### - Protocol Stack

Figure 7 is an explanatory diagram for describing an example of a protocol stack according to a first example embodiment. Referring to Figure 7, the base station 100 (eNB) does not have a GTP-U only for the gateway 200 in particular (as compared with an example of Figure 3).

In case of downlink transmission via a WLAN, the base station 100 transmits, to the gateway 200, a GTP-U packet (or a UDP packet) received form the core network 500 (the second core network node 520) without replacement of a header (i.e. transparently). Then, the gateway 200 receives the GTP-U packet (or the UDP packet) based on a TEID of which the base station 100 notified the gateway 200 in advance. In this way, a GTP-U terminates at the gateway 200.

On the other hand, in case of direct downlink transmission from the base station 100, the base station 100 removes the GTP-U header from a received GTP-U packet, and transmit the remaining data to the terminal apparatus 400. In this way, a GTP-U terminates at the base station 100.

### (1-3) TEID for Multicast

The TEID (of which the base station 100 notifies the gateway 200) may be a TEID for multicast (a common TEID) instead of a TEID of the base station 100 side. The first core network node 510 may notify the base station 100 of the TEID for the multicast. The TEID for the multicast may be referred to as a Common TEID (C-TEID). The multicast may be Multimedia Broadcast Multicast Service (MBMS).

The TEID for the multicast (e.g. the C-TEID) may be used for transmission and reception of data as well as the TEID of the base station 100 side. That is, in the above description for transmission and reception of data, the TEID of the base station 100 side may be replaced with the TEID for the multicast.

### (2) Uplink

### (2-1) Tunnel Endpoint Identifier (TEID)

As a second example, the TEID (of which the base station 100 notifies the gateway 200) is a TEID of the core network 500 side of which the first core network node 510 notifies the base station 100. That is the base station 100 (the first communication processing unit 143) notifies the gateway 200 a TEID of the core network 500 side of which the first core network node 510 (e.g. MME) notifies the base station 100.

The TEID of the core network 500 side is assigned in the core network 500, and is included in a packet transmitted from the base station 100 to the core network 500 (the second core network node 520). The TEID of the core network 500 side can be also said as an uplink TEID (e.g. UL GTP TEID). For example, the core network 500 is an EPC, and the TEID of the core network 500 side is an EPC TEID.

This, for example, enables the gateway 200 to transmit a packet including the TEID in a header. Thereby, as described later, replacement of a header by the base station 100 may be omitted and a processing load of the base station 100 may be reduced.

In addition, since the base station 100 notifies the gateway 200 of a TEID of the core network 500 side, the first core network node 510 does not need to perform any new operation (e.g. notification of a TEID to the gateway 200). Furthermore, since contents of a packet (e.g. a GTP-U packet) transmitted to the core network 500 does not change, the second core network node 520 may receive the packet regardless of existence of the gateway 200. In this way, effects to the core network 500 may be reduced.

### (2-2) Transmission and Reception of Data

The gateway 200 (the first communication processing unit 231) receives data from the terminal apparatus 400 via a WLAN (the WLAN-AP 300). Then, the gateway 200 (the second communication processing unit 233) transmits, to the base station 100, a packet including the data and a header containing the TEID of the core network 500 side.

The base station 100 (the first communication processing unit 143) receives the packet from the gateway 200. Then, the base station 100 (the second communication processing unit 145) transmits, to the core network 500 (the second core network node 520), the packet including the header and the data. That is, the base station 100 forwards the packet to the core network 500 (the second core network node 520) without performing replacement of a header (removal of the header and addition of a new header).

Thereby, for example, replacement of the header by the base station 100 is omitted and a processing load of the base station 100 is reduced.

### - Protocol Stack

Referring to Figure7 again, the base station 100 (eNB) does not have a GTP-U only for the gateway 200 in particular (as compared with an example of Figure 3) as described above. The gateway 200 generates a GTP-U packet including data received from the terminal apparatus 400 and a GTP-U header containing a TEID of which the base station 100 notifies the gateway 200 in advance, and transmits the GTP-U packet. The base station 100 transmits the GTP-U packet (or a UDP packet) to the core network 500 (the second core network node 520) without replacement of a header (i.e. transparently).

### (3) Notification

As described above, the base station 100 (the first communication processing unit 143) notifies the gateway 200 of the TEID.

For example, the base station 100 (the first communication processing unit 143) transmits a message including the TEID to the gateway 200. The base station 100 (the first communication processing unit 143) may transmit the message using a frame protocol (GTP-U, GRE, Stream Control Transmission Protocol (SCTP), Transmission Control Protocol (TCP), GTP version 1 Control (GTPv1-C), GTP version 2 Control (GTPv2-C), Radio Access Network Application Part (RANAP), S1 Application Protocol (S1-AP) or the like), for example.

As an example, the message is a message for setting of a TEID. Note that the base station 100 (the first communication processing unit 143) may further transmit, to the gateway 200, a message for release of TEID.

Note that the base station 100 (the information obtaining unit 141) may obtain not one of but both of the TEID of the base station 100 side and the TEID of the core network 500 side. Then, the base station 100 (the first communication processing unit 143) may notify the gateway 200 of both of the TEID of the base station 100 side and the TEID of the core network 500 side.

### (4) Quality of Service Information

For example, the base station 100 (the information obtaining unit 141) obtains the TEID and quality of service information corresponding to the TEID. Then the base station 100 (the first communication processing unit 143) notifies the gateway 200 of the TEID and the quality of service information.

For example, the quality of service information is a quality of service class identifier (QCI) or bearer information of bearer identified from the TEID. Note that the quality of service information is not limited to this example, and may be other information (e.g. a DiffServ Code Point (DSCP), an IP flow or the like).

The gateway 200 (the first communication processing unit 231) may perform priority control for transmission and reception of data based on the quality of service information.

Thereby, a stable service may be provided to a user (the terminal apparatus 400).

### (5) Flow of Processing

An example of processing according to the first example embodiment is described with reference to Figure 8. Figure 8 is a sequence diagram for describing an example of a schematic flow of processing according to a first example embodiment.

The base station 100 obtains an eNB TEID (= "1005"), an EPC TEID (= "2100") and a QCI of a bearer identified from these TEID (S601). The base station 100 itself assigns the eNB TEID and is notified of the EPC TEID by the first core network node 510.

The base station 100 transmits a message for setting of a TEID to the gateway 200, and the gateway 200 receives the message (S603). The message includes the eNB TEID (= "1005"), the EPC TEID (= "2100") and the QCI.

The gateway 200 sets the eNB TEID (= "1005"), the EPC TEID (= "2100") and the QCI (S605).

Furthermore, the gateway 200 transmits a message of acknowledge (ACK) to the base station 100, and the base station 100 receives the message (S607).

As a result, the base station 100 forwards, to the gateway 200, a GTP-U packet including the eNB TEID (= "1005") in a GTP-U header without replacement of a header (i.e. transparently), the gateway 200 receives the GTP-U packet. In addition, the gateway 200 transmits, to the base station 100, a GTP-U packet including the EPC TEID (= "2100") in a GTP-U header, and the base station 100 forwards the GTP packet to the second core network node 520 without replacement of a header (i.e. transparently).

After that, the base station 100 transmits a message for release of a TEID to the gateway 200, and the gateway 200 receives the message (S611). The message includes the eNB TEID (= "1005") and the like, for example.

The gateway 200 releases the eNB TEID (= "1005"), the EPC TEID (= "2100") and the QCI (S613).

Furthermore, the gateway 200 transmits a message of ACK to the base station 100, and the base station 100 receives the message (S615).

The base station 100 also releases the eNB TEID (= "1005"), the EPC TEID (= "2100") and the QCI (S617).

### <4.4. Modified Example>

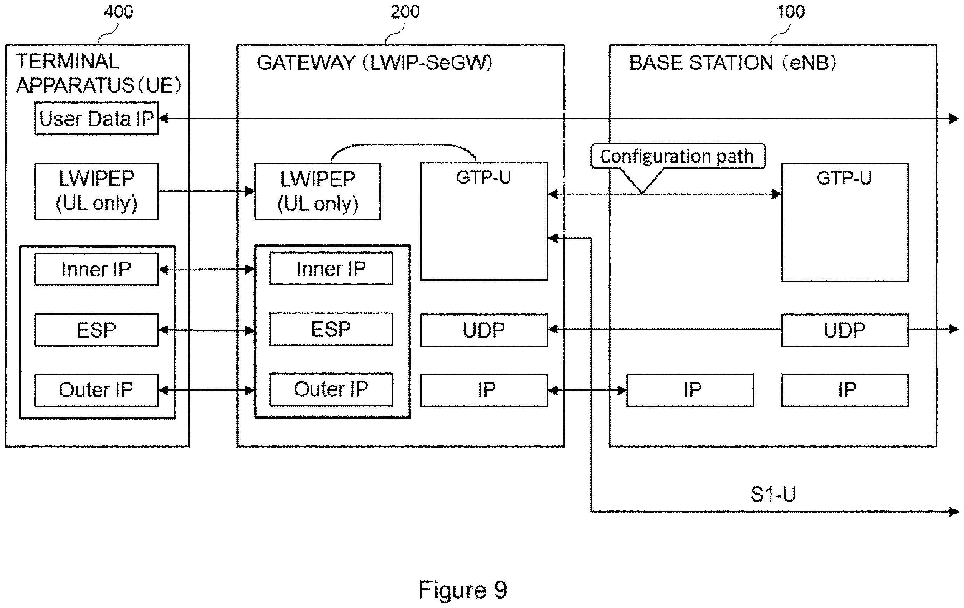

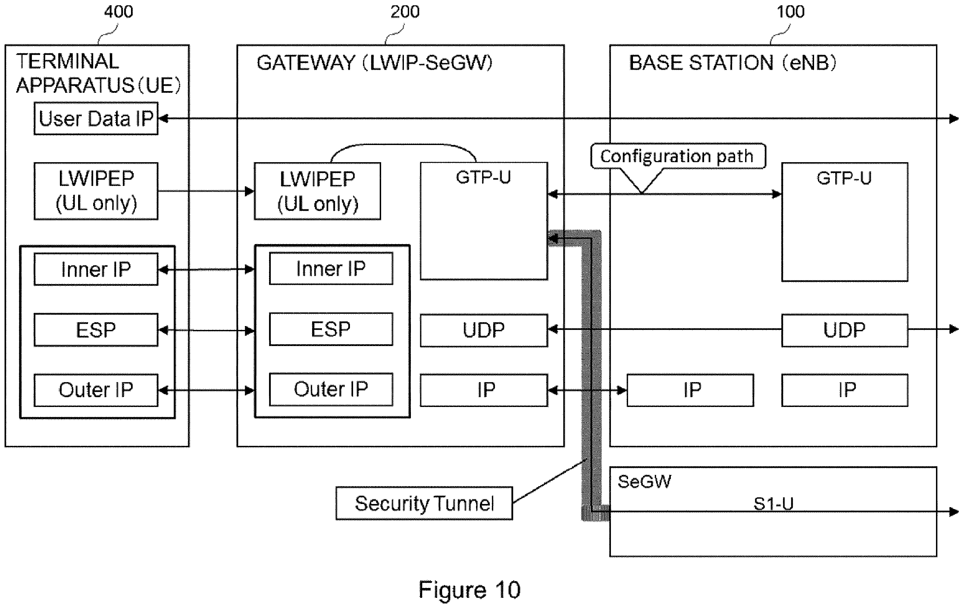

Next, a modified example of the first example embodiment is described with reference to Figure 9 and Figure 10.

As described above, the gateway 200 (the second communication processing unit 233) transmits or receives a packet including a header containing the TEID based on the TEID (of which the base station 100 notifies the gateway 200).

Particularly according to a modified example of the first example embodiment, the gateway 200 (the second communication processing unit 233) transmits the packet to the core network 500 or receives the packet from the core network 500 not via the base station 100.

Thereby, since base station 100 does not have to perform any processing for data transmitted/received via a WLAN (the WLAN-AP 300), a processing load of the base station 100 may be further reduced. In addition, a network topology may be more flexible.

### (1) Downlink

For example, the second core network node 520 transmits, to the gateway 200 not via base station 100, a packet including the TEID of the base station 100 side and data addressed to the terminal apparatus 400. Then, the gateway 200 (the second communication processing unit 233) receives the packet based on the TEID of the base station 100 side.

In this way, according to the modified example of the first example embodiment, the TEID of the base station 100 side is an identifier to be included in a packet transmitted from the core network 500 to the gateway 200 not via the base station 100.

Figure 9 is an explanatory diagram for describing a first example of a protocol stack according to a modified example of a first example embodiment. Referring Figure 9, in particular (as compared with an example of Figure 7), the gateway 200 has an S1-U interface, and receives, from the second core network node 520 not via the base station 100, a packet including a TEID of the base station 100 side in a GTP-U header.

Note that, for example, the base station 100 (the information obtaining unit 141) obtains the TEID of the base station 100 side and a transport layer address (e.g. an IP address) of the gateway 200. Then, the base station 100 (the second communication processing unit 145) notifies the first core network node 510 of the TEID of the base station 100 side and the transport layer address. For example, the base station 100 notifies the first core network node 510 of the transport layer address of the gateway 200 instead of a transport layer address of the base station 100. This, for example, enables the second core network node 520 to transmit the packet directly to the gateway 200 not via the base station 100.

### (2) Uplink

For example, the gateway 200 (the second communication processing unit 233) transmits, to the second core network node 520 not via the base station 100, a packet including the TEID of the core network 500 side and data from the terminal apparatus 400.

In this way, according to the modified example of the first example embodiment, the TEID of the core network 500 side is an identifier to be included in a packet transmitted from the gateway 200 to the core network 500 not via the base station 100.

Referring to Figure 9 again, in particular (as compared with an example of Figure 7), the gateway 200 has an S1-U interface, and transmits, to the second core network node 520 not via the base station 100, a packet including a TEID of the core network 500 side in a GTP-U header.

Note that, for example, the base station 100 (the information obtaining unit 141) obtains a transport layer address (e.g. an IP address) of the core network 500 side. Then, the base station 100 (the first communication processing unit 143) notifies the gateway 200 of the transport layer address. For example, the transport layer address is a transport layer address of the second core network node 520 (e.g. a S-GW). This, for example, enables the gateway 200 to transmit the packet directly to the core network 500 (the second core network node 520) not via the base station 100.

### (3) Use of Security Gateway of Backhaul Side

The gateway 200 (the second communication processing unit 233) may transmit the packet to the core network 500 or receive the packet from the core network 500 via a security gateway of the backhaul side. Thereby, security of communication between the gateway 200 and the core network 500 may be ensured.

Figure 10 is an explanatory diagram for describing a second example of a protocol stack according to a modified example of a first example embodiment. Referring to Figure 10, in particular (as compared with an example of Figure 9), the gateway 200 transmits a packet to the second core network node 520 or receive a packet from the second core network node 520 via a security gateway (SeGW) of the backhaul side.

Note that the base station 100 (the information obtaining unit 141) may obtain connection information for a connection with the security gateway of the backhaul side. Then, the base station 100 (the first communication processing unit 143) may notify the gateway 200 of the connection information. The gateway 200 (the second communication processing unit 233) may establish a connection with the security gateway of the backhaul side based on the connection information. The connection with the security gateway of the backhaul side may be a security tunnel (e.g. an IPsec tunnel). The connection information may include an electronic certificate for a connection with the security gateway of the backhaul side. This, for example, enables transmission and reception of a packet via a security gateway of the backhaul side.

The first example embodiment has been described above. According to the first example embodiment, for example, it is possible to reduce effects to the core network 500 and reduce a processing load of the base station 100 in case of transmission and reception of data via a WLAN.

### «5. Second Example Embodiment»

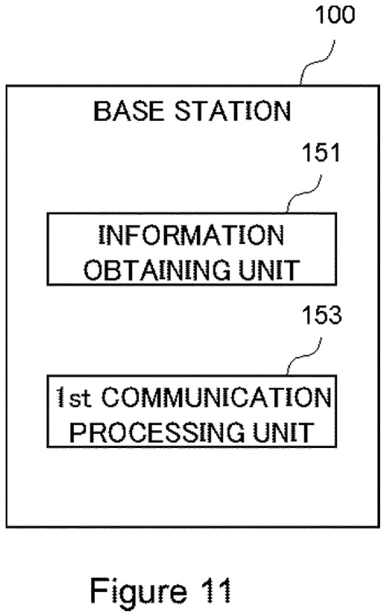

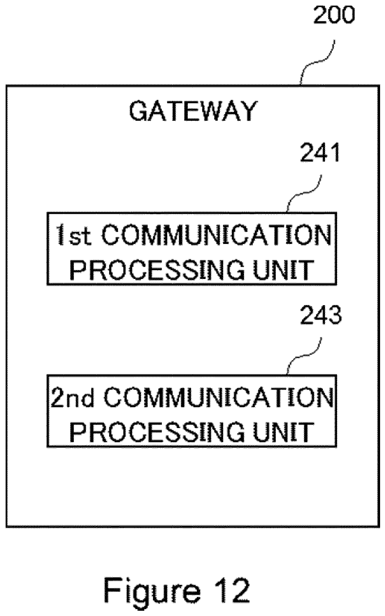

Subsequently, a second example embodiment of the present disclosure will be described with reference to Figure 11 and Figure 12. The above described first example embodiment is a specific example embodiment, while the second example embodiment is a more generalized example embodiment.

### <5.1. Configuration of Base Station>

Firstly, an example of a configuration of the base station 100 according to the second example embodiment is described with reference to Figure 11. Figure 11 is a block diagram illustrating an example of a schematic configuration of the base station 100 according to the second example embodiment. Referring to Figure 11, the base station 100 includes an information obtaining unit 151 and the first communication processing unit 153.

Specific operations of the information obtaining unit 151 and the first communication processing unit 153 will be described later.

The information obtaining unit 151 and the first communication processing unit 153 may be implemented with a base band (BB) processor, another processor and/or the like. The information obtaining unit 151 and the first communication processing unit 153 may be implemented with the same processor or with respective different processors.

The base station 100 may include a memory that stores a program and one or more processors that are capable of executing the program, and the one or more processors may execute the operations of the information obtaining unit 151 and the first communication processing unit 153. The program may be a program for causing a processor to execute the operations of the information obtaining unit 151 and the first communication processing unit 153.

### <5.2. Configuration of Gateway>

Next, an example of a configuration of the gateway 200 according to the second example embodiment is described with reference to Figure 12. Figure 12 is a block diagram illustrating an example of a schematic configuration of the gateway 200 according to the second example embodiment. Referring to Figure 12, the gateway 200 includes a first communication processing unit 241 and a second communication processing unit 243.

Specific operations of the first communication processing unit 241 and the second communication processing unit 243 will be described later.

The first communication processing unit 241 and the second communication processing unit 243 may be implemented with a processor and/or the like. The first communication processing unit 241 and the second communication processing unit 243 may be implemented with the same processor or with respective different processors.

The gateway 200 may include a memory that stores a program and one or more processors that are capable of executing the program, and the one or more processors may execute the operations of the first communication processing unit 241 and the second communication processing unit 243. The program may be a program for causing a processor to execute the operations of the first communication processing unit 241 and the second communication processing unit 243.

### <5.3. Technical Features>

Next, technical features of the second example embodiment are described.

According to the second example embodiment, the base station 100 (the information obtaining unit 151) obtains a tunnel endpoint identifier (TEID) of which one of the base station 100 and the first core network node 510 notifies the other of the base station 100 and the first core network node 510. Then, the base station 100 (the first communication processing unit 153) notifies the gateway 200 of the TEID.

On the other hand, the gateway 200 (the second communication processing unit 243) transmits or receive a packet including a header containing the TEID based on the TEID.

Descriptions about a TEID and transmission and reception of data for each of downlink and uplink, notification, quality of service information, and a flow of processing are, for example, the same as the descriptions about these for the first example embodiment except difference of a part of references. Hence, overlapping descriptions are omitted here.

The second example embodiment has been described above. According to the second example embodiment, for example, it is possible to reduce effects to the core network 500 and reduce a processing load of the base station 100 in case of transmission and reception of data via a WLAN.

While the example embodiments of the present disclosure have been described above, the present disclosure is not limited to these example embodiments. It will be understood by those skilled in the art that these example embodiments are merely examples and various modification/change can be made without departing from the scope of the present invention as defined by the appended claims.

For example, the steps in any processing described herein need not be performed chronologically in the order illustrated in the corresponding sequence diagram. For example, the steps of the processing may be performed in an order different from the order illustrated as the corresponding sequence diagram or may be performed in parallel. Moreover, one or some of the steps of the processing may be deleted, or one or more steps may be added to the processing.

In addition, an apparatus (e.g. one or more apparatuses (or units) out of a plurality of apparatuses (or units) constituting the base station, or a module for one of the plurality of apparatuses (or units)) including constituent elements of the base station described herein (e.g. the information obtaining unit, the first communication processing unit, the second communication processing unit, the third communication processing unit and/or the control unit) may be provided. An apparatus (e.g. a module for the gateway) including constituent elements of the gateway described herein (e.g. the first communication processing unit and/or the second communication processing unit) may be provided. Moreover, methods including processing of such constituent elements may be provided, and programs for causing processors to execute processing of such constituent elements may be provided. Furthermore, non-transitory computer readable recording media having recorded thereon the program may be provided. Of course, such apparatuses, methods, programs and non-transitory computer readable recording media are also included in the present disclosure.

In a mobile communication system, it is possible to reduce effects to a core network and reduce a processing load of a base station.

### Reference Signs List

- 1: System
- 100: Base Station
- 141, 151: Information Obtaining Unit
- 143, 153: First Communication Processing Unit
- 145: Second Communication Processing Unit
- 147: Third Communication Processing Unit
- 149: Control Unit
- 200: Gateway
- 231, 241: First Communication Processing Unit
- 233, 243: Second Communication Processing Unit
- 300: Wireless Local Area Network Access Point (WLAN-AP)
- 400: Terminal Apparatus
- 500: Core Network
- 510: First Core Network Node
- 520: Second Core Network Node

## Claims

1. A base station (100) for supporting a gateway which communicates with a terminal apparatus (400) via a wireless local area network and provides a security tunnel for communication via the wireless local area network, comprising:
an information obtaining unit (141) configured to obtain a tunnel endpoint identifier of which one of the base station (100) and a core network node (510) notifies the other of the base station (100) and the core network node (510), and
a first communication processing unit (143) configured to notify, of the tunnel endpoint identifier, the gateway (200).

2. The base station (100) according to claim 1, wherein the tunnel endpoint identifier is a tunnel endpoint identifier of the base station side of which the base station (100) notifies the core network node (510).

3. The base station (100) according to claim 1 or 2, further comprising:
a second communication processing unit (145) configured to receive, from a core network (500), a packet including data addressed to a terminal apparatus (400) and a header containing the tunnel endpoint identifier,
wherein the first communication processing unit (143) is configured to transmit, to the gateway (200), the packet including the header and the data.

4. The base station (100) according to claim 1 or 2, wherein the tunnel endpoint identifier is an identifier to be included in a packet transmitted from a core network (500) to the gateway (200)

5. The base station (100) according to any one of claims 1, 2 and 4, wherein
the information obtaining unit (141) is configured to obtain the tunnel endpoint identifier and a transport layer address of the gateway (200),
the base station (100) further comprises a second communication processing unit (145) configured to notify the core network node (510) of the tunnel endpoint identifier and the transport layer address.

6. The base station (100) according to claim 1, wherein the tunnel endpoint identifier is a tunnel endpoint identifier of the core network side of which the core network node (510) notifies the base station (100).

7. The base station (100) according to claim 1 or 6, wherein
the first communication processing unit (143) is configured to receive, from the gateway (200), a packet including data from a terminal apparatus (400) and a header containing the tunnel endpoint identifier, and
the base station (100) further comprises a second communication processing unit (145) configured to transmit, to a core network (500), the packet including the header and the data.

8. The base station (100) according to claim 1 or 6, wherein the tunnel endpoint identifier is an identifier to be included in a packet transmitted from the gateway (200) to a core network (500)

9. The base station (100) according to any one of claims 1, 6 and 8, wherein
the information obtaining unit (141) is configured to obtain a transport layer address of the core network side, and
the first communication processing unit (143) is configured to notify the gateway (200) of the transport layer address.

10. The base station (100) according to any one of claims 1 to 9, wherein
the information obtaining unit (141) is configured to obtain the tunnel endpoint identifier and quality of service information corresponding to the tunnel endpoint identifier, and
the first communication processing unit (143) is configured to notify the gateway (200) of the tunnel endpoint identifier and the quality of service information.

11. The base station (100) according to claim 10, wherein the quality of service information is a quality of service class identifier of a bearer identified from the tunnel endpoint identifier.

12. The base station (100) according to any one of claims 1 to 11, wherein
the information obtaining unit (141) is configured to obtain connection information for a connection with a security gateway (200) of the backhaul side,
the first communication processing unit (143) is configured to notify the gateway (200) of the connection information, and
the security gateway (200) of the backhaul side is a gateway (200) which data goes through to be transmitted from one of the gateway (200) and a core network (500) to the other of the gateway (200) and the core network (500).

13. A method of a base station for supporting a gateway which communicates with a terminal apparatus (400) via a wireless local area network and provides a security tunnel for communication via the wireless local area network, comprising:
obtaining a tunnel endpoint identifier of which one of a base station (100) and a core network node (510) notifies the other of the base station (100) and the core network node (510) and
notifying, of the tunnel endpoint identifier, the gateway (200).

## Patentansprüche

1. Basisstation (100) zum Unterstützen eines Gateways, das mit einem Endgerät (400) über ein drahtloses lokales Netzwerk kommuniziert und einen Sicherheitstunnel für eine Kommunikation über das drahtlose lokale Netzwerk bereitstellt, mit:
einer Informationsgewinnungseinheit (141), die dafür konfiguriert ist, eine Tunnelendpunktidentifizierung zu erhalten, die anzeigt, welche Komponente unter der Basisstation (100) und einem Kernnetzwerkknoten (510) die andere Komponente unter der Basisstation (100) und dem Kernnetzwerkknoten (510) benachrichtigt; und
einer ersten Kommunikationsverarbeitungseinheit (143), die dafür konfiguriert ist, das Gateway (200) über die Tunnelendpunktidentifizierung zu benachrichtigen.

2. Basisstation (100) nach Anspruch 1, wobei die Tunnelendpunktidentifizierung eine Tunnelendpunktidentifizierung der Basisstationsseite ist, über die die Basisstation (100) den Kernnetzwerkknoten (510) benachrichtigt.

3. Basisstation (100) nach Anspruch 1 oder 2, ferner mit:
einer zweiten Kommunikationsverarbeitungseinheit (145), die dafür konfiguriert ist, von einem Kernnetzwerk (500) ein Paket zu empfangen, das Daten, die an ein Endgerät (400) adressiert sind, und einen Header aufweist, der die Tunnelendpunktidentifizierung enthält,
wobei die erste Kommunikationsverarbeitungseinheit (143) dafür konfiguriert ist, das Paket mit dem Header und den Daten an das Gateway (200) zu übertragen.

4. Basisstation (100) nach Anspruch 1 oder 2, wobei die
Tunnelendpunktidentifizierung eine Identifizierung ist, die in ein Paket eingefügt werden soll, das von einem Kernnetzwerk (500) an das Gateway (200) übertragen wird.

5. Basisstation (100) nach einem der Ansprüche 1, 2 und 4, wobei
die Informationsgewinnungseinheit (141) dafür konfiguriert ist, die Tunnelendpunktidentifizierung und eine Transportschichtadresse des Gateways (200) zu erhalten,
die Basisstation (100) ferner eine zweite Kommunikationsverarbeitungseinheit (145) aufweist, die dafür konfiguriert ist, den Kernnetzwerkknoten (510) über die Tunnelendpunktidentifizierung und die Transportschichtadresse zu informieren.

6. Basisstation (100) nach Anspruch 1, wobei die Tunnelendpunktidentifizierung eine Tunnelendpunktidentifizierung der Kernnetzwerkseite ist, über die der Kernnetzwerkknoten (510) die Basisstation (100) informiert.

7. Basisstation (100) nach Anspruch 1 oder 6, wobei
die erste Kommunikationsverarbeitungseinheit (143) dafür konfiguriert ist, vom Gateway (200) ein Paket zu empfangen, das Daten von einem Endgerät (400) und einen Header aufweist, der die Tunnelendpunktidentifizierung enthält, und
die Basisstation (100) ferner eine zweite Kommunikationsverarbeitungseinheit (145) aufweist, die dafür konfiguriert ist, das Paket, das den Header und die Daten aufweist, an ein Kernnetzwerk (500) zu übertragen.

8. Basisstation (100) nach Anspruch 1 oder 6, wobei die Tunnelendpunktidentifizierung eine Identifizierung ist, die in ein vom Gateway (200) an ein Kernnetzwerk (500) übertragenes Paket eingefügt werden soll.

9. Basisstation (100) nach einem der Ansprüche 1, 6 und 8, wobei
die Informationsgewinnungseinheit (141) dafür konfiguriert ist, eine Transportschichtadresse der Kernnetzwerkseite zu erhalten, und
die erste Kommunikationsverarbeitungseinheit (143) dafür konfiguriert ist, das Gateway (200) über die Transportschichtadresse zu informieren.

10. Basisstation (100) nach einem der Ansprüche 1 bis 9, wobei
die Informationsgewinnungseinheit (141) dafür konfiguriert ist, die Tunnelendpunktidentifizierung und der Tunnelendpunktidentifizierung entsprechende Dienstgüteinformation zu erhalten, und
die erste Kommunikationsverarbeitungseinheit (143) dafür konfiguriert ist, das Gateway (200) über die Tunnelendpunktidentifizierung und die Dienstgüteinformation zu informieren.

11. Basisstation (100) nach Anspruch 10, wobei die Dienstgüteinformation eine Dienstgüteklassenidentifizierung eines Trägers ist, der durch die Tunnelendpunktidentifizierung identifiziert wird.

12. Basisstation (100) nach einem der Ansprüche 1 bis 11, wobei
die Informationsgewinnungseinheit (141) dafür konfiguriert ist, Verbindungsinformation für eine Verbindung mit einem Sicherheits-Gateway (200) der Backhaul-Seite zu erhalten,
die erste Kommunikationsverarbeitungseinheit (143) dafür konfiguriert ist, das Gateway (200) über die Verbindungsinformation zu informieren, und
das Sicherheits-Gateway (200) der Backhaul-Seite ein Gateway (200) ist, durch das Daten laufen, die von einer Komponente unter dem Gateway (200) und dem Kernnetzwerk (500) zur anderen Komponente unter dem Gateway (200) und dem Kernnetzwerk (500) übertragen werden sollen.

13. Verfahren einer Basisstation zum Unterstützen eines Gateways, das mit einem Endgerät (400) über ein drahtloses lokales Netzwerk kommuniziert und einen Sicherheitstunnel für eine Kommunikation über das drahtlose lokale Netzwerk bereitstellt, mit den Schritten:
Erhalten einer Tunnelendpunktidentifizierung, über die eine Komponente unter einer Basisstation (100) und einem Kernnetzwerkknoten (510) die andere Komponente unter der Basisstation (100) und dem Kernnetzwerkknoten (510) informiert; und
Benachrichtigen des Gateways (200) über die Tunnelendpunktidentifizierung.

## Revendications

1. Station de base (100) pour prendre en charge une passerelle qui communique avec un appareil terminal (400) via un réseau local sans fil et fournit un tunnel de sécurité pour une communication via le réseau local sans fil, comprenant:
une unité d'obtention d'informations (141) configurée pour obtenir un identifiant de point d'extrémité de tunnel duquel l'un parmi la station de base (100) et un noeud de réseau central (510) notifie l'autre parmi la station de base (100) et le noeud de réseau central (510), et
une première unité de traitement de communication (143) configurée pour notifier la passerelle (200) de l'identifiant de point d'extrémité de tunnel.

2. Station de base (100) selon la revendication 1, dans laquelle l'identifiant de point d'extrémité de tunnel est un identifiant de point d'extrémité de tunnel du côté station de base duquel la station de base (100) notifie le noeud de réseau central (510).

3. Station de base (100) selon la revendication 1 ou 2, comprenant en outre:
une deuxième unité de traitement de communication (145) configurée pour recevoir, depuis un réseau central (500), un paquet comprenant des données adressées à un appareil terminal (400) et un en-tête contenant l'identifiant de point d'extrémité de tunnel,
dans laquelle la première unité de traitement de communication (143) est configurée pour transmettre, à la passerelle (200), le paquet comprenant l'en-tête et les données.

4. Station de base (100) selon la revendication 1 ou 2, dans laquelle l'identifiant de point d'extrémité de tunnel est un identifiant qui doit être compris dans un paquet transmis depuis un réseau central (500) à la passerelle (200).

5. Station de base (100) selon l'une quelconque des revendications 1, 2 et 4, dans laquelle
l'unité d'obtention d'informations (141) est configurée pour obtenir l'identifiant de point d'extrémité de tunnel et une adresse de couche de transport de la passerelle (200),
la station de base (100) comprend en outre une deuxième unité de traitement de communication (145) configurée pour notifier le noeud de réseau central (510) de l'identifiant de point d'extrémité de tunnel et de l'adresse de couche de transport.

6. Station de base (100) selon la revendication 1, dans laquelle l'identifiant de point d'extrémité de tunnel est un identifiant de point d'extrémité de tunnel du côté réseau central duquel le noeud de réseau central (510) notifie la station de base (100).

7. Station de base (100) selon la revendication 1 ou 6, dans laquelle
la première unité de traitement de communication (143) est configurée pour recevoir, depuis la passerelle (200), un paquet comprenant des données depuis un appareil terminal (400) et un en-tête contenant l'identifiant de point d'extrémité de tunnel, et
la station de base (100) comprend en outre une deuxième unité de traitement de communication (145) configurée pour transmettre, à un réseau central (500), le paquet comprenant l'en-tête et les données.

8. Station de base (100) selon la revendication 1 ou 6, dans laquelle l'identifiant de point d'extrémité de tunnel est un identifiant qui doit être compris dans un paquet transmis depuis la passerelle (200) à un réseau central (500).

9. Station de base (100) selon l'une quelconque des revendications 1, 6 et 8, dans laquelle
l'unité d'obtention d'informations (141) est configurée pour obtenir une adresse de couche de transport du côté réseau central, et
la première unité de traitement de communication (143) est configurée pour notifier la passerelle (200) de l'adresse de couche de transport.

10. Station de base (100) selon l'une quelconque des revendications 1 à 9, dans laquelle
l'unité d'obtention d'informations (141) est configurée pour obtenir l'identifiant de point d'extrémité de tunnel et des informations de qualité de service correspondant à l'identifiant de point d'extrémité de tunnel, et
la première unité de traitement de communication (143) est configurée pour notifier la passerelle (200) de l'identifiant de point d'extrémité de tunnel et des informations de qualité de service.

11. Station de base (100) selon la revendication 10, dans laquelle les informations de qualité de service sont un identifiant de classe de qualité de service d'un support identifié à partir de l'identifiant de point d'extrémité de tunnel.

12. Station de base (100) selon l'une quelconque des revendications 1 à 11, dans laquelle
l'unité d'obtention d'informations (141) est configurée pour obtenir des informations de connexion pour une connexion avec une passerelle de sécurité (200) du côté liaison terrestre,
la première unité de traitement de communication (143) est configurée pour notifier la passerelle (200) des informations de connexion, et
la passerelle de sécurité (200) du côté liaison terrestre est une passerelle (200) qui est traversée par des données qui doivent être transmises depuis l'un parmi la passerelle (200) et un réseau central (500) à l'autre parmi la passerelle (200) et le réseau central (500).

13. Procédé d'une station de base pour prendre en charge une passerelle qui communique avec un appareil terminal (400) via un réseau local sans fil et fournit un tunnel de sécurité pour une communication via le réseau local sans fil, comprenant les étapes consistant en:
l'obtention d'un identifiant de point d'extrémité de tunnel duquel l'un parmi une station de base (100) et un noeud de réseau central (510) notifie l'autre parmi la station de base (100) et le noeud de réseau central (510) et
la notification de la passerelle (200) de l'identifiant de point d'extrémité de tunnel.
